# EUROPEAN PATENT APPLICATION

(11) **EP 2 239 093 A1**
(43) Date of publication of application: **13.10.2010**
(21) Application number: 08871171.8
(22) Date of filing: 06.11.2008
(51) Int. Cl.: B23Q 41/02, G05B 19/418

(54) **PRODUCTION FACILITY**

(30) Priority: 25.01.2008 JP 2008014456
(71) Applicant: Mitsubishi Heavy Industries, Ltd., Tokyo 108-8215 (JP)
(72) Inventor: MIZUTA, Keiji, Hiroshima-shi Hiroshima 733-8553 (JP); FUJIWARA, Naoyuki, Takasago-shi Hyogo 676-8686 (JP); KASANO, Manabu, Takasago-shi Hyogo 676-8686 (JP); NIITANI, Haruhiko, Ritto-shi Shiga 520-3080 (JP); YAMASHITA, Tsugumaru, Ritto-shi Shiga 520-3080 (JP); FUJIMURA, Noritaka, Ritto-shi Shiga 520-3080 (JP)
(74) Representative: Henkel, Feiler & Hänzel
(86) International application number: PCT/JP2008/070224
(87) International publication number: WO 2009/093368

(57) **Abstract**

A production facility for producing a product efficiently while saving the space of the facility. The production facility comprises a plurality of machine tools (31,32,33,34) for machining a work piece (11), a conveyor (16) for conveying the work piece (11), and a controller (41) for controlling the machine tools (31,32,33,34) and the conveyor (16). The machine tool (31,32,33,34) has a function for performing the machining of its own process, the machining of a preceding process, and the machining of a following process on the work piece, and the controller (41) controls the machine tools (31,32,33,34) and the conveyor (16) to perform the machining of respective processes continuously on the work piece (11) depending on the machining situation of the work piece (11) by the plurality of machine tools (31,32,33,34).

## Description

### Production Facility

### Technical Field

This invention relates to a production facility for producing a product by machining a workpiece by machine tools.

### Background Art

As a production facility for producing a product by machining a workpiece by machine tools, there was, for example, a facility having a plurality of machine tools arranged adjacently in parallel with the conveying path of a conveyor for conveying the workpiece. With this production facility, each of the machine tools was responsible for the machining of a single process, and the workpiece having finished the machining in each machine tool was sent sequentially to the machine tool disposed adjacently on the downstream side.

There was also a facility equipped with units, each unit comprising a plurality of machine tools per machining of a single process. With this production facility, a workpiece having finished the machining in one unit was sent sequentially to the unit disposed on the downstream side of this unit.

Patent Document 1 and Patent Document 2 each describe a transfer machine which machines a workpiece in processes divided among a plurality of machine tools. This transfer machine includes a conveyor provided independently between the machine tool of a preceding process and the machine tool of a succeeding process which are adjacent to each other. This conveyor conveys the workpiece directly from the machine tool of the preceding process to the machine tool of the succeeding process.
Patent Document 1: Japanese Patent No. 3111843
Patent Document 2: Japanese Patent No. 3173309

### Disclosure of the Invention

### Problems to be solved by the invention

In the aforementioned production facility having the plurality of machine tools arranged along the one conveying path for the workpiece, if one of the plural machine tools stopped because of failure or the like, it was impossible to perform the machining of the process, which the stopping machine tool took charge of, on the workpiece. As a result, a decrease in the production rate of the product was induced. If a demand for the product changed relative to the production capacity of the production facility for the product, moreover, there was a possibility for an increase in the production cost of the product.

With the above-mentioned production facility having the units each comprising the plurality of machine tools per machining of the single process, it was possible to curtail a decrease in the production rate of the product due to stoppage of one of the machine tools, and it was also possible to adjust the volume of production according to the demand for the product by increasing or decreasing the number of the machine tools within the unit. Since the plurality of machine tools were installed for each unit, however, the production facility itself became large in size. As a result, a saving in the space of the facility was not made successfully.

With the transfer machines described in Patent Document 1 and Patent Document 2, the conveyor is provided independently, so that the area of installation can be minimized. If one of the plural machine tools stoppedbecause of failure or the like, however, it was impossible to perform the machining of the process, which the stopping machine tool took charge of, on the workpiece. As a result, a decrease in the production rate of the product was induced. If one process was placed under the charge of the plurality of machine tools, moreover, installation of the plural machine tools was required, thus resulting in a large area of installation, making the space saving of the facility impossible.

The present invention has been proposed in the light of the above-described problems. It is an object of the present invention to provide a production facility which can produce a product efficiently while saving the space of the facility.

### Means for Solving the Problems

A production facility according to a first aspect of the invention, intended for solving the above-mentioned problems, comprises: a plurality of machine tools for machining a workpiece; a conveyor for conveying the workpiece; and a controller for controlling the machine tools and the conveyor, and is one in which each of the machine tools has a function of performing machining of its ownprocess, machining of aprecedingprocess, andmachiningof a succeeding process on the workpiece, and the controller controls the machine tools and the conveyor so as to perform the machining of the respective processes continuously on the workpiece in accordance with a status of machining of the workpiece by the plurality of machine tools.

A production facility according to a second aspect of the invention, intended for solving the above-mentioned problems, is the production facility according to the first aspect of the invention, further comprising a waiting stand, which allows the workpiece to wait, for each of the machine tools, and wherein when the machining of the own process on the workpiece has been completed at the machine tool and the workpiece is not present on the waiting stand for the machine tool, the controller controls the machine tool so as to perform the machining of the succeeding process on the workpiece having finished the machining of the own process by the machine tool.

A production facility according to a third aspect of the invention, intended for solving the above-mentioned problems, is the production facility according to the second aspect of the invention, wherein while the machining of the succeeding process on the workpiece is taking place at the machine tool, when the machining of the own process on other workpiece different from the workpiece is completed at the machine tool of the succeeding process, and the workpiece is not present on the waiting stand for the machine tool of the succeeding process, then the controller controls the machine tool so as to interrupt the machining of the succeeding process on the workpiece, and controls the conveyor so as to convey the workpiece, for which the machining of the succeeding process has been interrupted, to the machine tool of the succeeding process.

A production facility according to a fourth aspect of the invention, intended for solving the above-mentioned problems, is the production facility according to the third aspect of the invention, wherein the controller monitors progress of the processes of the plurality of machine tools; predicts a state where each of the machine tools has proceeded with its machining process, beginning at each point in time; gives instructions about a range of machining on the workpiece; and controls the plurality of machine tools and the conveyor such that the workpiece is present on the waiting stand for the machine tool at time of completion of the process.

A production facility according to a fifth aspect of the invention, intended for solving the above-mentioned problems, is the production facility according to any one of the first to fourth aspects of the invention, wherein if the machine tool fails, the controller controls the conveyor so as to convey the workpiece past the machine tool, which has failed, to the machine tool of the succeeding process.

A production facility according to a sixth aspect of the invention, intended for solving the above-mentioned problems, is the production facility according to any one of the first to fifth aspects of the invention, wherein the plurality of machine tools are arranged in a straight line.

A production facility according to a seventh aspect of the invention, intended for solving the above-mentioned problems, is the production facility according to the sixth aspect of the invention, wherein the plurality of machine tools are arranged adjacently in a sequence of the processes for machining the workpiece.

A production facility according to an eighth aspect of the invention, intended for solving the above-mentioned problems, is the production facility according to any one of the first to fifth aspects of the invention, wherein the plurality of machine tools are arranged around the conveyor.

A production facility according to a ninth aspect of the invention, intended for solving the above-mentioned problems, is the production facility according to any one of the first to eighth aspects of the invention, wherein the plurality of machine tools constitute a cell involving the processes in which the plurality of machine tools machine the workpiece to form a product, and a plurality of the cells are provided.

### Effects of the Invention

The production facility according to the first aspect of the invention comprises: a plurality of machine tools for machining a workpiece; a conveyor for conveying the workpiece; and a controller for controlling the machine tools and the conveyor, and is one in which each of the machine tools has a function of performing machining of its own process, machining of a preceding process, and machining of a succeeding process on the workpiece, and the controller controls the machine tools and the conveyor so as to perform the machining of the respective processes continuously on the workpiece in accordance with a status of machining of the workpiece by the plurality of machine tools. Because of these features, the machining of the workpiece by the plurality of machine tools and the machine tool which the workpiece is to be conveyed to are selected, whereby the operating rate of the plurality of machine tools can be maximized. Moreover, the single machine tool has the function of performing the machining of the own process by the machine tool, the machining of the preceding process, and the machining of the succeeding process on the workpiece. Thus, a saving in the installation space of the machine tools can be achieved. Consequently, the product can be produced efficiently, with a saving in the space of the facility being made.

The production facility according to the second aspect of the invention further comprises a waiting stand, which allows the workpiece to wait, for each of the machine tools. When the machining of the own process on the workpiece has been completed at the machine tool and the workpiece is not present on the waiting stand for the machine tool, the controller controls the machine tool so as to perform the machining of the succeeding process on the workpiece having finished the machining of the own process by the machine tool. Thus, the same actions and effects as those of the production facility according to the first aspect of the invention are exhibited. Besides, a decrease in the operating rate of the machine tool because of the absence of the workpiece to be subjected to the machining of the own process can be suppressed. Hence, the product can be produced efficiently.

According to the production facility concerned with the third aspect of the invention, while the machining of the succeeding process on the workpiece is taking place at the machine tool, when the machining of the own process on other workpiece different from the workpiece is completed at the machine tool of the succeeding process, and the workpiece is not present on the waiting stand for the machine tool of the succeeding process, then the controller controls the machine tool so as to interrupt the machining of the succeeding process on the workpiece, and controls the conveyor so as to convey the workpiece, for which the machining of the succeeding process has been interrupted, to the machine tool of the succeeding process. Thus, the same actions and effects as those of the production facility according to the second aspect of the invention are exhibited. Besides, it becomes possible to suppress a fall in the operating rate of the machine tool due to the absence of the workpiece to be subjected to the own process in association with the machining of the succeeding process by the machine tool. Hence, the product can be produced efficiently.

With the production facility according to the fourth aspect of the invention, the controller monitors progress of the processes of the plurality of machine tools; predicts a state where each of the machine tools has proceeded with its machining process, beginning at each point in time; gives instructions about a range of machining on the workpiece; and controls the plurality of machine tools and the conveyor such that the workpiece is present on the waiting stand for the machine tool at time of completion of the process. Because of these features, like the production facility according to the third aspect of the invention, it becomes possible to suppress a fall in the operating rate of the machine tool due to the absence of the workpiece to be subjected to the own process in association with the machining of the succeeding process by the machine tool. Hence, the production rate of the product can be increased.

With the production facility according to the fifth aspect of the invention, if the machine tool fails, the controller controls the conveyor so as to convey the workpiece past the machine tool, which has failed, to the machine tool of the succeeding process. Thus, the same actions and effects as those of the production facilities according to the first to fourth aspects of the invention are exhibited. Besides, the machining of the own process of the machine tool which has failed can be entrusted to other of the machine tools. Hence, a decrease in the production rate of the product can be suppressed.

With the production facility according to the sixth aspect of the invention, the plurality of machine tools are arranged in a straight line. Thus, the same actions and effects as those of the production facilities according to the first to fifth aspects of the invention are exhibited. Besides, the conveyance of the workpiece by the conveyor becomes easy, the time required for the conveyance of the workpiece is shortened, and a decrease in the production rate of the product can be suppressed.

With the production facility according to the seventh aspect of the invention, the plurality of machine tools are arranged adjacently in a sequence of the processes for machining the workpiece. Because of this feature, like the production facility according to the sixth aspect of the invention, the conveyance of the workpiece by the conveyor becomes easy, the time required for the conveyance of the workpiece is shortened, and a decrease in the production rate of the product can be suppressed.

With the production facility according to the eighth aspect of the invention, the plurality of machine tools are arranged around the conveyor. Thus, the same actions and effects as those of the production facilities according to the first to fifth aspects of the invention are exhibited. Besides, a further saving in the space of the facility can be achieved.

With the production facility according to the ninth aspect of the invention, the plurality of machine tools constitute a cell involving the processes in which the plurality of machine tools machine the workpiece to form a product, and a plurality of the cells are provided. Thus, the same actions and effects as those of the production facilities according to the first to eighth aspects of the invention are exhibited. Besides, the volume of production of the product can be easily adjusted by increasing or decreasing the amount of installation of the machine tools for each cell in response to a demand for the product.

### Brief Description of the Drawings

[Fig. 1] is a schematic configurational drawing of a first embodiment of the production facility according to the present invention.
[Fig. 2] is a schematic configurational drawing of a second embodiment of the production facility according to the present invention.
[Fig. 3] is a schematic configurational drawing of a third embodiment of the production facility according to the present invention.
[Fig. 4] is a schematic configurational drawing of a fourth embodiment of the production facility according to the present invention.

### Description of the Numerals

11 Workpiece, 16 Conveyor, 19 Product, 21 to 25 Waiting stands, 31 to 34 Machine tools, 41, 241, 341 Controllers, 42, 242, 342, 343, 344 Signal wires, 30, 80 Cells, 50, 100, 200, 300 Production facilities.

### Best Mode for Carrying Out the Invention

The best mode of the production facility according to the present invention will be described concretely based on the accompanying drawings.

### [First Embodiment]

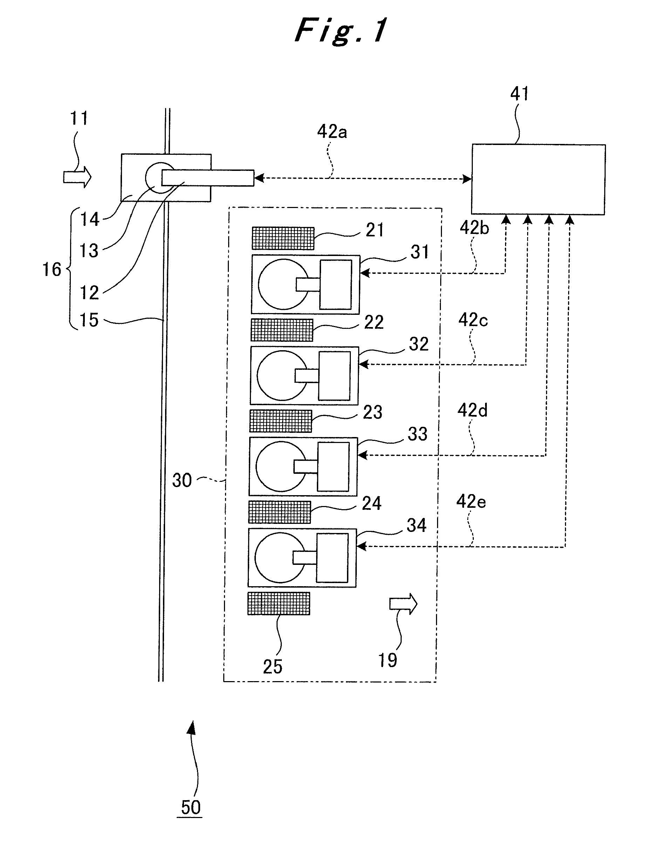

A first embodiment of the production facility according to the present invention, as applied to a facility for producing a product by the machining of four processes, will be described using Fig. 1.
Fig. 1 is a schematic configurational drawing of the production facility.

In a production facility 50 according to the present embodiment, a workpiece (work) 11 is carried in, and sent to a conveyor 16, as shown in Fig. 1. This conveyor 16 is equipped with a robot arm 12 which grips the workpiece 11. The robot arm 12 is provided on a support stand 13. The support stand 13 is fixed to a conveying stand 14. The conveying stand 14 is placed on a rail 15, and is movable on the rail 15.

A single cell 30, which machines the workpiece 11 to produce a product 19, is placed in a range where the above-mentioned robot arm 12 extends. In this cell 30, a plurality of (four in the illustrated example) machine tools 31, 32, 33, 34 for machining the workpiece 11 are arranged adjacently in a straight line. Examples of the machine tools 31, 32, 33, 34 are cutting machine tools for metal components which have two or more, but six or less rotating tool main spindles different in direction from each other, the respective main spindles being capable of machining at the same time.

A waiting stand 21, which allows the workpiece 11 carried into the cell 30 to wait, is installed on one side of the machine tool 31. Waiting stands 22, 23, 24, which allow the workpiece 11 machined by the machine tools 31, 32, 33 to wait, are installed between the machine tool 31 and the machine tool 32, between the machine tool 32 and the machine tool 33, and between the machine tool 33 and the machine tool 34. A waiting stand 25, which allows the product 19 to wait, is installed on one side of the machine tool 34. Examples of these waiting stands 21, 22, 23, 24, 25 are stands which enable at least two of the workpieces 11 or products 19 to wait.

The conveyor 16 and the machine tools 31, 32, 33, 34 mentioned above are connected to a controller 41 via signal wires 42a, 42b, 42c, 42d, 42e. These signal wires 42a, 42b, 42c, 42d, 42e can transmit signals bidirectionally. Thus, the conveyor 16 and the machine tools 31, 32, 33, 34, and the controller 41 are capable of bidirectional communication.

The above-described machine tools 31, 32, 33, 34 have the functions of being able to perform the machining of their own processes which the machine tools 31, 32, 33, 34 carry out themselves, the machining of a preceding process which is performed before the machining of their own processes of the machine tools 31, 32, 33, 34, and the machining of a succeeding process which is performed after the machining of their own processes of the machine tools 31, 32, 33, 34. That is, the first machine tool 31 has the function of being able to perform the machining of a first process which the first machine tool 31 carries out, and the machining of a second process which the second machine tool 32 adjacent thereto carries out. The second machine tool 32 has the function of being able to perform the machining of the second process which the second machine tool 32 carries out, the machining of the first process which the first machine tool 31 adjacent thereto carries out, and the machining of a third process which the third machine tool 33 adjacent thereto carries out. The third machine tool 33 has the function of being able to perform the machining of the third process which the third machine tool 33 carries out, the machining of the second process which the second machine tool 32 adjacent thereto carries out, and the machining of a fourth process which the fourth machine tool 34 adjacent thereto carries out. The fourth machine tool 34 has the function of being able to perform the machining of the fourth process which the fourth machine tool 34 carries out, and the machining of the third process which the third machine tool 33 adjacent thereto carries out.

The aforementioned controller 41 has the function of controlling the conveyor 16 and the machine tools 31, 32, 33, 34. That is, the controller 41 has the function of controlling the machine tools 31, 32, 33, 34 and the conveyor 16 to perform the machining of the respective processes continuously on the workpiece 11 in accordance with the status of machining of the workpiece 11 by the machine tools 31, 32, 33, 34. Concretely, the controller 41 has the following functions (I) to (IV):

### Function (I)

When the machining of the own process of the machine tool 31, 32, 33 on the workpiece 11 has been completed and the workpiece 11 is not present on the waiting stand 21, 22, 23 for the machine tool, the controller 41 functions to control the machine tool 31, 32, 33 so as to perform the machining of the succeeding process on the workpiece 11 having finished the machining of the own process by the machine tool 31, 32, 33.

### Function (II)

While the machining of the succeeding process on the workpiece 11 is taking place at the machine tool 31, 32, 33, when the machining of the own process on other workpiece different from the above workpiece is completed at the machine tool 32, 33, 34 of the succeeding process, and the workpiece is not present on the waiting stand 22, 23, 24 for the machine tool of the succeeding process, then the controller 41 functions to control the machine tool 31, 32, 33 so as to interrupt the machining of the succeeding process on the workpiece, and control the conveyor 16 so as to convey the workpiece, for which the machining of the succeeding process has been interrupted, to the machine tool 32, 33, 34 of the succeeding process.

### Function (III)

The controller 41 has the function of monitoring the progress of the process of the machine tool 31, 32, 33, 34; predicting a state where the machine tools 31, 32, 33, 34 have proceeded with their machining processes, beginning at each point in time; give instructions about a range of machining on the workpiece 11; and controlling the machine tools 31, 32, 33, 34 and the conveyor 16 such that the workpiece 11 is present on the waiting stand 21, 22, 23, 24 of the machine tool at the time of completion of the process.

### Function (IV)

If one of the machine tools 31, 32, 33, 34 fails, the controller 41 functions to control the conveyor 16 so as to convey the workpiece 11 past the machine tool, which has failed, to the machine tool of the succeeding process.

Accordingly, the above-described production facility 50 comprises the plurality of machine tools 31, 32, 33, 34 for machining the workpiece 11, the conveyor 16 for conveying the workpiece 11, and the controller 41 for controlling the machine tools 31, 32, 33, 34 and the conveyor 16. The machine tool 31, 32, 33 or 34 has the function of performing the machining of its own process, the machining of the preceding process, and the machining of the succeeding process on the workpiece. The controller 41 controls the machine tools 31, 32, 33, 34 and the conveyor 16 so as to perform the machining of the respective processes continuously on the workpiece 11 in accordance with the machining status of the workpiece 11 by the plurality of machine tools 31, 32, 33, 34. By so doing, the machining of the workpiece 11 by the machine tool 31, 32, 33 or 34, and which of the machine tools 31, 32, 33 and 34 the workpiece 11 is to be conveyed to are selected, whereby the operating rate of the machine tools 31, 32, 33, 34 can be maximized. Thus, even if the failure rate of the machine tools 31, 32, 33, 34 is the same as that in the conventional technologies, the average operating rate is increased as compared with the conventional production facilities. Moreover, the single machine tool has the function of performing the machining of the own process by the machine tool, the machining of the preceding process, and the machining of the succeeding process on the workpiece 11. Thus, a saving in the installation space of the machine tools can be achieved in comparison with a comb-like production facility in which units each having a plurality of machine tools in charge of the machining of one process are provided for the respective processes. Consequently, the product 19 can be produced efficiently, with a saving in the space of the facility being made. If a demand for the product 19 declines, moreover, a decrease in the operating rate of the machine tool 31, 32, 33 or 34 can be curtailed, because the machine tool 31, 32, 33 or 34 has the function of performing the machining of the own process by the machine tool 31, 32, 33 or 34, the machining of the preceding process, and the machining of the succeeding process on the workpiece 11. If a demand for the product 19 increases, more of the cells 30 can be added.

When the machining of the own process of the machine tool 31, 32 or 33 on the workpiece 11 has been completed and the workpiece 11 is not present on the waiting stand 21, 22 or 23 for the machine tool, the controller 41 controls the machine tool 31, 32 or 33 so as to perform the machining of the succeeding process on the workpiece 11 having finished the machining of the own process by the machine tool 31, 32 or 33. By so doing, a decrease in the operating rate of the machine tool because of the absence of the workpiece to be subjected to the machining of the own process can be suppressed. Thus, the product 19 can be produced efficiently.

While the machining of the succeeding process on the workpiece 11 is taking place at the machine tool 31, 32 or 33, when the machining of the own process on other workpiece different from the above workpiece is completed at the machine tool 32, 33 or 34 of the succeeding process, and the workpiece is not present on the waiting stand 22, 23 or 24 for the machine tool of the succeeding process, then the controller 41 controls the machine tool 31, 32 or 33 so as to interrupt the machining of the succeeding process on the workpiece, and controls the conveyor 16 so as to convey the workpiece, for which the machining of the succeeding process has been interrupted, to the machine tool 32, 33 or 34 of the succeeding process. By so doing, it becomes possible to suppress a fall in the operating rate of the machine tool 32, 33 or 34 due to the absence of the workpiece to be subjected to the own process in association with the machining of the succeeding process by the machine tool 31, 32 or 33. Thus, the product 19 can be produced efficiently.

The controller 41 monitors the progress of the process of the machine tool 31, 32, 33 or 34; predicts a state where the machine tool 31, 32, 33 or 34 has proceeded with its machining process, beginning at each point in time; gives instructions about a range of machining on the workpiece 11; and controls the machine tool 31, 32, 33 or 34 and the conveyor 16 such that the workpiece 11 is present on the waiting stand 21, 22, 23 or 24 for the machine tool at the time of completion of the process. By so doing, it becomes possible to suppress a fall in the operating rate of the machine tool 32, 33 or 34 because of the absence of the workpiece to be subjected to the machining of the own process in association with the machining of the succeeding process by the machine tool 31, 32 or 33. Thus, the production rate of the product 19 can be increased.

If any one of the machine tools 31, 32, 33, 34 fails, the controller 41 controls the conveyor 16 so as to convey the workpiece 11 past the machine tool, which has failed, to the machine tool of the succeeding process. By so doing, the machining of the own process of the machine tool which has failed canbe entrusted to other of the machine tools. Thus, a decrease in the production rate of the product 19 can be suppressed.

The machine tools 31, 32, 33, 34 are arranged in a straight line. Thus, the conveyance of the workpiece 11 by the conveyor 16 becomes easy, the time required for the conveyance of the workpiece 11 is shortened, and a decrease in the production rate of the product 19 can be suppressed.

The machine tools 31, 32, 33, 34 are arranged adjacently in the sequence of the processes for machining the workpiece 11. Thus, the conveyance of the workpiece 11 by the conveyor 16 becomes easy, the time required for the conveyance of the workpiece 11 is shortened, and a decrease in the production rate of the product 19 can be suppressed.

The foregoing descriptions use the production facility 50 equipped with the conveyor 16 which is provided to be capable of traveling on the rail 15 to convey the workpiece 11. However, there may be adopted a production facility equipped with an automated guided vehicle as the conveyor for conveying the workpiece 11 between the machine tools 31, 32, 33, 34, bringing in the workpiece 11, and carrying out the product 19. Even such a production facility exhibits the same actions and effects as those of the above-mentioned production facility 50.

### [Second Embodiment]

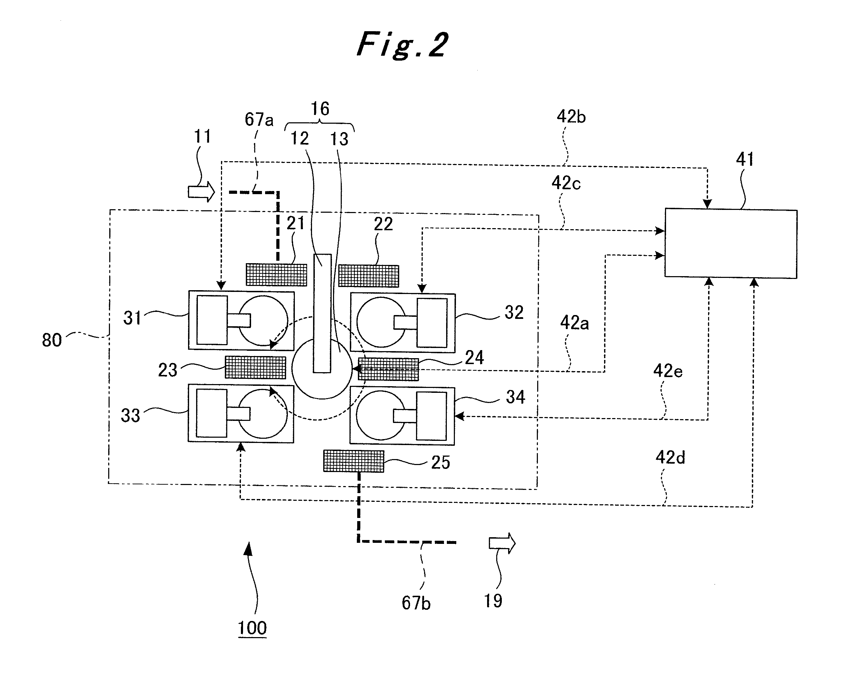

A second embodiment of the production facility according to the present invention, as applied to a facility for producing a product by the machining of four processes, will be described concretely using Fig. 2.
Fig. 2 is a schematic configurational drawing of the production facility.

The production facility according to the second embodiment of the present invention involves a change in the arrangement of the conveyor 16 and the machine tools 31, 32, 33, 34 which the production facility 50 according to the above-described first embodiment of the present invention has. Except this change, the production facility according to the second embodiment of the present invention has the same configuration as that of the production facility according to the first embodiment of the present invention.
In the production facility according to the second embodiment of the present invention, the same devices as those in the production facility 50 according to the above-described first embodiment of the present invention will be assigned the same numerals as in the production facility 50, and explanations for them will be omitted.

A production facility 100 according to the second embodiment of the present invention is equipped with a cell 80 having four machine tools 31, 32, 33, 34 arranged around a conveyor 16, as shown in Fig. 2. Concretely, in this cell 80, the second machine tool 32 and the third machine tool 33 are arranged adjacently to the first machine tool 31. The fourth machine tool 34 is disposed adjacently to the second machine tool 32 and the third machine tool 33. A waiting stand 21 is disposed adjacently to the first machine tool 31. A waiting stand 22 is disposed adjacently to the second machine tool 32. A waiting stand 23 is disposed between the first machine tool 31 and the third machine tool 33. Awaiting stand 24 is disposed between the second machine tool 32 and the fourth machine tool 34. A waiting stand 25 is disposed adjacently to the fourth machine tool 34. The numeral 67a denotes a carry-in device for carrying the workpiece 11 onto the waiting stand 21. The numeral 67b denotes a carry-out device for carrying a product 19 out of the cell 80.

A controller 41 has the aforementioned functions (I) to (IV), and controls the machine tools 31, 32, 33, 34 and the conveyor 16 so as to perform the machining of the respective processes continuously on the workpiece 11 in accordance with the status of machining of the workpiece 11 by the machine tools 31, 32, 33, 34.

Consequently, according to the above-described production facility 100, the same actions and effects as those of the production facility 50 according to the first embodiment mentioned above are exhibited. Besides, the machine tools 31, 32, 33, 34 are arranged about the conveyor 16, so that the installation area of the machine tools 31, 32, 33, 34 and the conveyor 16 can be minimized, and a further saving in the space of the facility can be achieved.

The production facility of the second embodiment has been explained using the production facility 100 which conveys the workpiece 11 by one robot arm 12 possessed by the conveyor 16. However, the production facility can be configured as a production facility equipped with a conveyor for conveying the workpiece by a plurality of the robot arms. Even such a production facility exhibits the same actions and effects as those of the above-described production facility 100.

### [Third Embodiment]

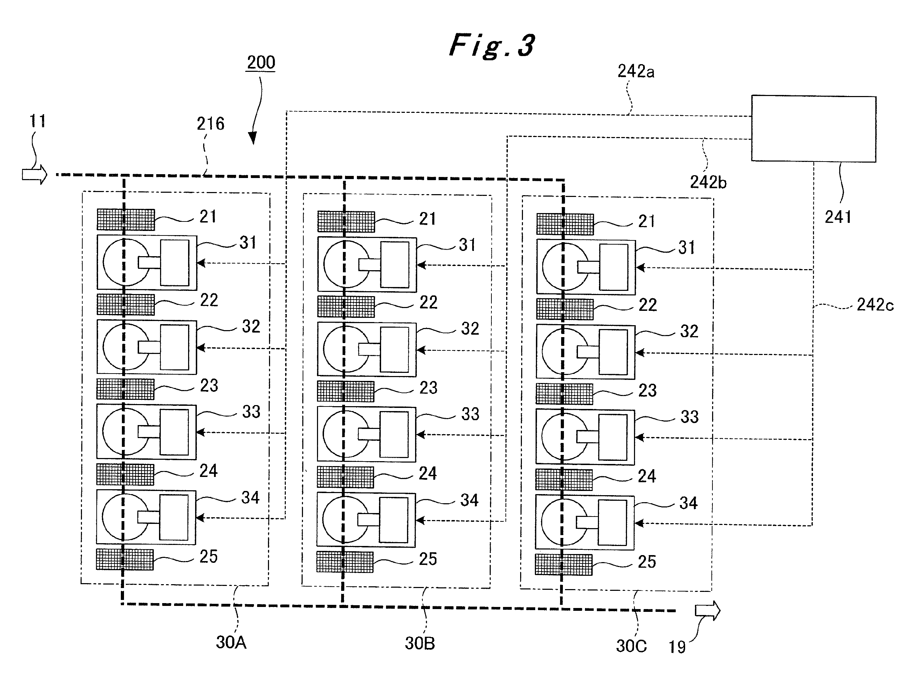

A third embodiment of the production facility according to the present invention, as applied to a facility which includes three cells and produces a product by the machining of four processes, will be described using Fig. 3.
Fig. 3 is a schematic configurational drawing of the production facility.

The production facility according to the third embodiment of the present invention involves a change in the number of the cells 30 which the production facility 50 according to the aforementioned first embodiment of the present invention has. Except this change, the production facility according to the third embodiment of the present invention has the same configuration as that of the production facility according to the first embodiment of the present invention.
In the production facility according to the third embodiment of the present invention, the same devices as those in the production facility 50 according to the above-described first embodiment of the present invention will be assigned the same numerals as in the production facility 50, and explanations for them will be omitted.

A production facility 200 according to the third embodiment of the present invention is equipped with three cells, 30A, 30B, 30C, as shown in Fig. 3. Respective machine tools 31, 32, 33, 34 of the respective cells 30A, 30B, 30C are connected to a controller 241 via signal wires 242a, 242b, 242c. The numeral 216 denotes a conveyor for conveying a workpiece 11 and a product 19. This conveyor 216 is connected to the controller 241 via a signal wire (not shown).

The controller 241 has the aforementioned functions (I) to (IV), and controls the machine tools 31, 32, 33, 34 and the conveyor 216 to perform the machining of the respective processes continuously on the workpiece 11 in accordance with the status of machining of the workpiece 11 by the machine tools 31, 32, 33, 34.

Consequently, according to the above-described production facility 200, one cell 30 is constituted by the plurality of machine tools 31, 32, 33, 34 which perform the processes for machining the workpiece 11 to form the product 19. Three of such cells are provided. Thus, the same actions and effects as those of the production facility 50 according to the first embodiment mentioned above are exhibited. Besides, the volume of production of the product 19 can be easily adjusted by increasing or decreasing the amount of installation of the machine tools per cell in response to a demand for the product 19.

### [Fourth Embodiment]

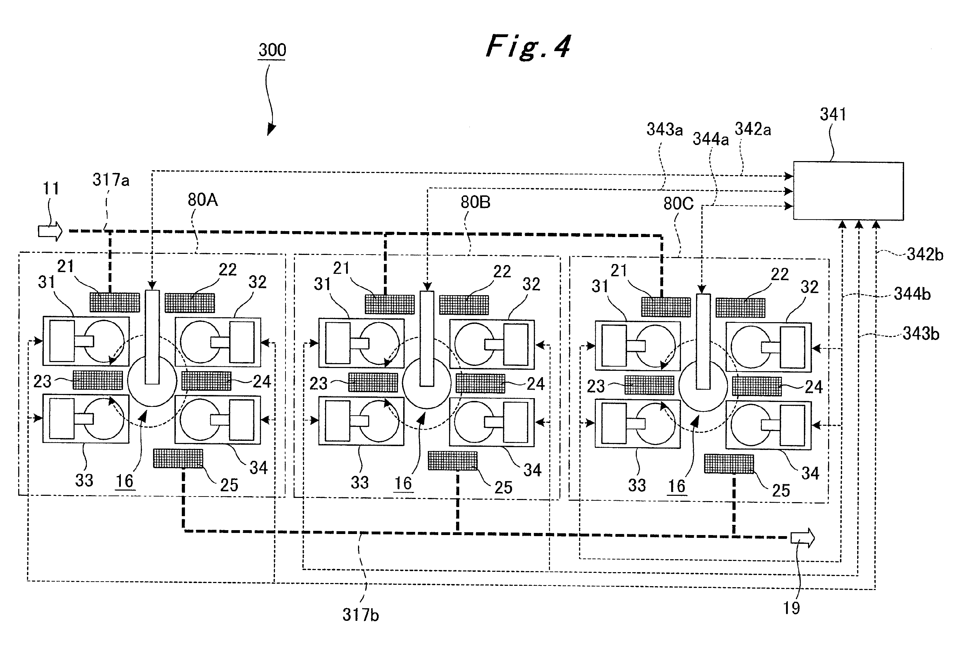

A fourth embodiment of the production facility according to the present invention, as applied to a facility which includes three cells and produces a product by the machining of four processes, will be described using Fig. 4.
Fig. 4 is a schematic configurational drawing of the production facility.

The production facility according to the fourth embodiment of the present invention involves a change in the number of the cells 80 which the production facility 100 according to the aforementioned second embodiment of the present invention has. Except for this change, the production facility according to the fourth embodiment of the present invention has the same configuration as that of the production facility according to the second embodiment of the present invention.
In the production facility according to the fourth embodiment of the present invention, the same devices as those in the production facility 100 according to the above-described second embodiment of the present invention will be assigned the same numerals as in the production facility 100, and explanations for them will be omitted.

A production facility 300 according to the fourth embodiment of the present invention is equipped with three cells, 80A, 80B, 80C, as shown in Fig. 4. Conveyors 16 of the respective cells, 80A, 80B, 80C are connected to a controller 341 via signal wires 342a, 343a, 344a. Respective machine tools 31, 32, 33, 34 of the respective cells 80A, 80B, 80C are connected to the controller 341 via signal wires 342b, 343b, 344b. The numeral 317a denotes a carry-in device for carrying a workpiece 11 onto a waiting stand 21 of each of the cells 30A, 30B and 30C. The numeral 317b denotes a carry-out device for carrying a product 19 out from a waiting stand 25 of each of the cells 30A, 30B and 30C. The carry-in device 317a and the carry-out device 317b are connected to the controller 341 via signal wires (not shown).

The controller 341 has the aforementioned functions (I) to (IV), and controls the machine tools 31, 32, 33, 34, the conveyor 16 and 317a, 317b so as to perform the machining of the respective processes continuously on the workpiece 11 in accordance with the status of machining of the workpiece 11 by the machine tools 31, 32, 33, 34.

Consequently, according to the above-described production facility 300, one cell 80 is constituted by the plurality of machine tools 31, 32, 33, 34 which perform the processes for machining the workpiece 11 to form the product 19. Three of such cells are provided. Thus, the same actions and effects as those of the production facility 100 according to the second embodiment mentioned above are exhibited. Besides, the volume of production of the product 19 can be easily adjusted by increasing or decreasing the amount of installation of the machine tools per cell in response to a demand for the product 19.

### [Other embodiments]

The above first to fourth embodiments of the production facility according to the present invention have been described using the production facilities 50, 100, 200, 300 as applied to the facility equipped with the cell for producing the product 19 by the machining of the four processes on the workpiece 11. However, the present invention can also be applied to a production facility equipped with the cell which allows three of the machine tools to produce the product by the machining of three processes on the workpiece, or the cell which allows five or more of the machine tools to produce the product by the machining of five or more processes on the workpiece. Even such a production facility exhibits the same actions and effects as those of the above-mentioned production facilities 50, 100, 200, 300.

## Claims

1. A production facility, comprising:
a plurality of machine tools for machining a workpiece;
a conveyor for conveying the workpiece; and
a controller for controlling the machine tools and the conveyor,
wherein each of the machine tools has a function of performing machining of its ownprocess, machining of a precedingprocess, and machining of a succeeding process on the workpiece, and
the controller controls the machine tools and the conveyor so as to perform the machining of the respective processes continuously on the workpiece in accordance with a status of machining of the workpiece by the plurality of machine tools.

2. The production facility according to claim 1, further comprising
a waiting stand, which allows the workpiece to wait, for each of the machine tools, and
wherein when the machining of the own process on the workpiece has been completed at the machine tool and the workpiece is not present on the waiting stand for the machine tool, the controller controls the machine tool so as to perform the machining of the succeeding process on the workpiece having finished the machining of the own process by the machine tool.

3. The production facility according to claim 2, wherein
while the machining of the succeeding process on the workpiece is taking place at the machine tool, when the machining of the own process on other workpiece different from the workpiece is completed at the machine tool of the succeeding process, and the workpiece is not present on the waiting stand for the machine tool of the succeeding process, then the controller controls the machine tool so as to interrupt the machining of the succeeding process on the workpiece, and controls the conveyor so as to convey the workpiece, for which the machining of the succeeding process has been interrupted, to the machine tool of the succeeding process.

4. The production facility according to claim 3, wherein
the controller monitors progress of the processes of the plurality of machine tools; predicts a state where each of the machine tools has proceeded with its machining process, beginning at each point in time; gives instructions about a range of machining on the workpiece; and controls the plurality of machine tools and the conveyor such that the workpiece is present on the waiting stand for the machine tool at time of completion of the process.

5. The production facility according to any one of claims 1 to 4, wherein
if the machine tool fails, the controller controls the conveyor so as to convey the workpiece past the machine tool, which has failed, to the machine tool of the succeeding process.

6. The production facility according to any one of claims 1 to 5, wherein the plurality of machine tools are arranged in a straight line.

7. The production facility according to claim 6, wherein
the plurality of machine tools are arranged adjacently in a sequence of the processes for machining the workpiece.

8. The production facility according to any one of claims 1 to 5, wherein the plurality of machine tools are arranged around the conveyor.

9. The production facility according to any one of claims 1 to 8, wherein
the plurality of machine tools constitute a cell involving the processes in which the plurality of machine tools machine the workpiece to form a product, and
a plurality of the cells are provided.
